# EUROPEAN PATENT SPECIFICATION

(11) **EP 0 619 861 B1**
(45) Date of publication and mention of the grant of the patent: **03.07.1996**
(21) Application number: 93901431.2
(22) Date of filing: 04.01.1993
(51) Int. Cl.: F16F 3/08, B60R 13/01, B61D 11/02

(54) **A SHOCK ABSORBER**
STOSSDÄMPFER
AMORTISSEUR

(30) Priority: 07.01.1992 SE 9200022
(43) Date of publication of application: 19.10.1994
(73) Proprietor: Trelleborg Building Products AB, 263 21 Höganäs (SE)
(72) Inventor: LINDQVIST, Hans, S-931 34 Skelleftea (SE)
(74) Representative: Lundin, Björn-Eric
(86) International application number: SE9300004
(87) International publication number: WO9314329

(56) References cited:
- DE-B- 2 635 571
- GB-A- 1 068 834
- US-A- 3 574 379
- US-A- 3 578 375
- US-A- 3 775 926
- US-A- 3 912 325
- US-A- 4 320 913
- US-A- 5 074 407

## Description

The present invention relates to a shock absorber of the kind defined in the preamble of Claim 1. The invention also relates to use of the inventive shock absorber and to a method of making adjustments thereto.

There is a great need for different types of shock absorbers which will function to protect apparatus and devices which are subject to sudden impact forces, for instance devices which are subjected to shock forces caused by loading goods thereonto. Such devices will include the loading baskets of mining trucks, transporters, saw mill materials handling equipment, loading and offloading piers, ramps, and so on.

In US-A-3574379 there is disclosed a shock-absorbing device comprising a bumper pad including a tubular casing of flexible plastic material. The casing is filled with resilient, spongy, cellular foam material saturated with a liquid. The device flexes yieldably when subjected to moderate impact, but on severe impact the device is designed to be destroyed and liquid released at a controlled rate. This is a device which is strictly restricted for use in automobile bumpers, where severe impact occurs only at accidents.

The object of the present invention is to provide a particularly effective shock absorber which can be used in a number of different connections. This object is achieved with an shock absorber having the characteristic features set forth in the characterizing clause of respective following in dependent claims.

At least one of the bars of the shock absorber can be replaced, so as to enable the shock absorber to be adjusted from case to case and therewith meet current requirements.

The external elements of the shock absorber can be standardized and the centre body or the shock absorbing bars can be varied so as to impart to the shock absorber those properties that are required on that particular occasion.

The external elements of the shock absorber are conveniently made of impact resistant and wear resistant rubber or plastic material, whereas the centre body protected by said external elements is conveniently made from a relatively soft rubber or plastic material which has good impact absorbing properties.

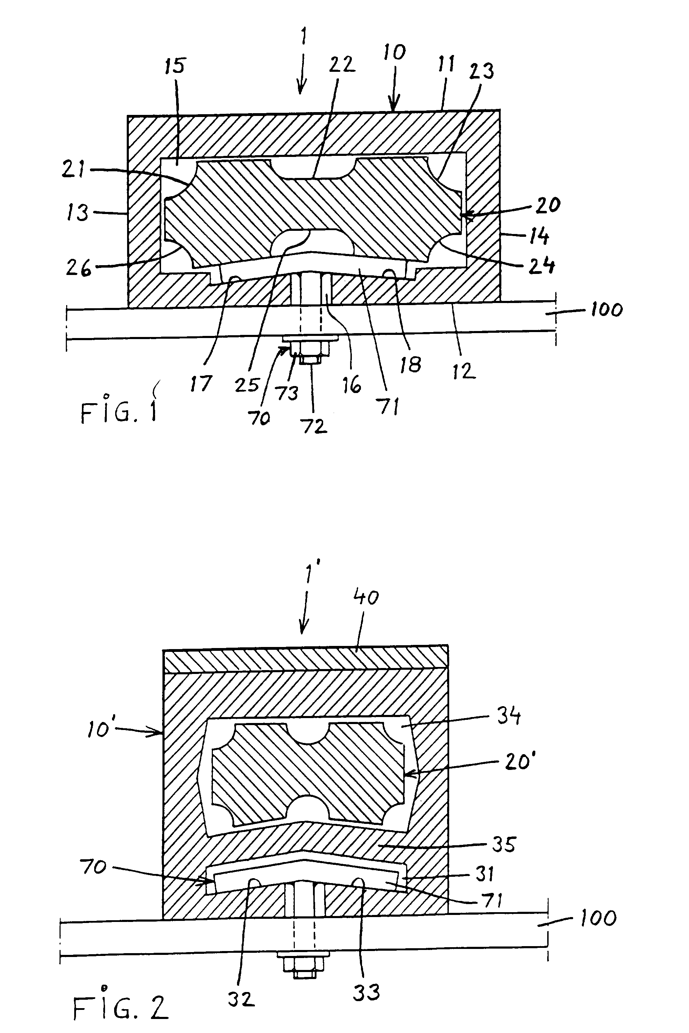

The invention will now be described in more detail with reference top exemplifying embodiments thereof and also with reference to the accompanying drawings, in which Figures 1 to 3 are cross-sectional views of three different embodiments of the inventive shock absorber, showing the absorber mounted on a supportive surface.

The shock absorber 1 illustrated in Figure 1 includes an external element 10 and a centre element 20 in the form of a shock absorbing bar. In cross-section, the external element has a generally rectangular shape and includes an upper side 11, a lower side 12 and two end sides 13 and 14. The external element 10 also includes a generally rectangular aperture 15 which accommodates the bar 20 and also a fastener device shown generally at 70. The lower side 12 includes a longitudinally extending slot 16 which communicates with the aperture 15. Oblique abutment surfaces 17 and 18 which coact with the fastener device 70 are provided on the lower aperture defining surface on each side of the slot 16.

The outer contours or cross-sectional shape of the shock absorbing bar 20 are/is adapted to conform essentially with the cross-sectional shape of the aperture 15, although while bearing in mind the space requirement of the fastener device 70 in the aperture 15. The bar 20 may be provided with external recesses 21-26 in order to facilitate deformation of the bar 20 when the upper surface 11 of the shock absorber 1 is subjected to shock generating loads. The shock absorbing bar 20 is undersized with regard to the dimensions of the space in which the bar is accommodated, so that the bar can be readily fitted into the aperture 15 defined by the external element 10.

The fastener device 70 of the illustrated embodiment has the form of a slightly angled attachment bar 71 which includes a requisite number of screw-threaded rods 72. The angle defined by the attachment bar 71 coincides essentially with the angle defined by the two abutment surfaces 17 and 18.

In use, a number of inventive shock absorbers 1 are mounted on a supportive surface 100 which is to be protected against impact shocks, said fastener devices 70 being fastened to the supportive surface 100 with the aid of nuts 73 for instance. When fitting the shock absorbers to the supportive surface 100, it is preferred to place the absorbers 1 so that the side surfaces 13 and 14 of neighbouring absorbers are in contact with one another or close together.

The shock absorber 1' shown in Figure 2 differs from the shock absorber 1 shown in Figure 1 by virtue of a separate aperture 31 for accommodation of the fastener device 70, this separate aperture 31 also having oblique abutment surfaces, here referenced 32 and 33, for coaction with the attachment bar 71. The aperture which accommodates the shock absorbing bar 20' is referenced 34. The external element 10' of this embodiment has a cross-piece 35 which extends between the two apertures 34 and 31 such as to improve the stability of the shock absorber 1'. The shock absorbing bar 20' of this embodiment is also provided with a number of external recesses. It is also suitable in some instances to provide the upper surface of the shock absorber 1' with a layer 40 of material that has good sliding properties. The provision of such a slide or glide layer 40 may be appropriate when the shock absorbers are intended to afford an impact absorbing support beneath a conveyor belt in a belt loading zone, with the underside of the belt sliding on the slide surface 40.

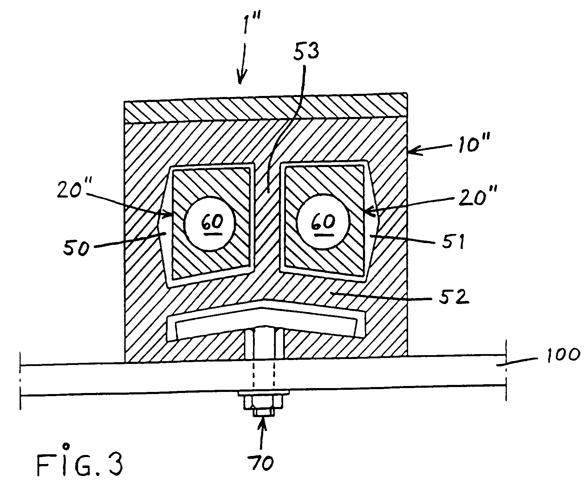

In the case of the Figure 3 embodiment of the inventive shock absorber 1" the aperture provided in the external element 10" for accommodating the shock absorbing bars 20" is divided into two spaces 50 and 51 and in addition to the aforesaid cross-piece 52 also includes a vertical partition wall 53, as seen in the drawing. The shock absorbing bars 20" of this embodiment are also provided with a respective internal cavity 60.

The external elements and the shock absorbing bars are conveniently extruded from a suitable rubber or plastic material and their length measurements and other dimensions are dependent on the intended use of the shock absorber. The various apertures, recesses and cavities thus extend along the full length of the external elements and shock absorbing bars.

It will be understood that the size and shape of the apertures provided in the external elements for accommodation of the shock absorbing bars can be varied, as can also the number of apertures. This also applies to the number, shape and size of the shock absorbing bars.

It will also be understood that the recesses and cavities provided in the shock absorbing bars can also be varied within wide limits, as can also the dimensions of said bars in relation to the apertures in the external elements. Furthermore, more than one shock absorbing bar may be placed in a common aperture, if so desired.

As will be understood, the external elements and the shock absorbing bars may be made of any one of a large number of materials, while bearing in mind that the shock absorbing bars will preferably be made of a material that has good shock absorbing properties.

The configuration of the fastener device 70 and the aperture that accommodates said device may also vary within wide limits, although it will be understood that the illustrated and described fastener device will enable a damaged sock absorber to be replaced very simply.

Furthermore, the upper side 11 of the external element 10 may be arched or curved slightly, so that when seen in cross-section the shock absorber 1 will have a greater height extension at its centre or middle than at its outer side edges. The shock absorbing bars and their accommodating apertures may also be adapted to this curvature of said upper side, if so desired.

Finally, it will be understood that the impact absorbing properties of the inventive shock absorber can be changed to suit current requirements, by simply changing the shock absorbing bars. In difficult cases, an optimal shock absorber for the work concerned can be arrived at by experimentation.

The invention is not therefore restricted to the described and illustrated embodiments thereof, since modifications and changes can be made without digressing from the concept of the invention as claimed.

## Claims

1. A shock absorber (1;1';1") having an external element (10;10';10") made on an impact and wear resistant rubber or plastic material and an internal shock absorbing bar (20;20';20") made of a material providing an impact absorbing effect, the absorber further including a fastener device (70) for attachment of the absorber to a supportive surface (100) to be protected against the shock of impact forces, whereby the shock absorbing bar (20;20';20") is arranged in an elongated, canalformed aperture (15;34;50;51) inside the external element **characterized in** that said internal shock absorbing bar (20;20';20") is loosely accomodated so as to allow replacement of the same.

2. A shock absorber according to claim 1, **characterized in** that the external element (10;10';10") also includes an aperture (15,16;31) for accomodating the fastener device (70).

3. A shock absorber according to claim 1 or 2, **chacterized in** that the shock absorbing bar (20;20';20") is provided with recesses or cavities (21-26; 60).

4. A shock absorber according to claim 2 or 3, **characterized in** that the aperture (15,16;31) for accomodating the fastener device (70) has two oblique abutment surfaces (17,18;32,33) ofr coaction with said fastener device.

5. A shock absorber according to any one of claims 2-4, **characterized** in that the connector (35;52) which is located between the aperture (34;50,51) which accommodates the shock absorbing bar (20';20") and the aperture (31) which accommodates the fastener device (70).

6. A shock absorber according to any one of claims 1-5, **characteried in** that the external element (10") has a vertical connection (53) which is located between two apertures (50,51) which accommodate shock absorbing bars (20").

7. A shock absorber according to any one of claims 1-6, **characterized in** that the external element (10') is provided with a slide layer (40) on the upper surface thereof.

8. The use of a shock absorber according to any one of claims 1-7, **characterized in** that a number of shock absorber (1;1';1") are mounted on a supportive surface (100) to be protected from impact shock, with the side edges (13,14) of neighbouring shock absorbers in contact with on another or lying close together.

9. A method relating to the use of a shock absorber according to any one of claims 1-7 **characterized by** substituting in use one or more of the shock absorber bars (20;20';20") with other bars in a manner to trim the shock absorbing properties of the shock absorber (1;1';1") to suit current requirements.

## Patentansprüche

1. Stoßdämpfer (1, 1', 1") mit einem äußeren Element (10, 10', 10") aus einem schlag- und verschleißbeständigen Kautschuk- oder Kunststoffmaterial und einem inneren schlagdämpfenden Stab (20, 20', 20") aus einem Material, das eine stoßdämpfende Wirkung ergibt, wobei der Stoßdämpfer weiterhin eine Befestigungseinrichtung (70) zur Befestigung des Stoßdämpfers an einer Trägeroberfläche (100) einschließt, die gegen den Stoß von Schlagkräften geschützt werden soll, und wobei der stoßdämpfende Stab (20, 20', 20") in einem länglichen, als Kanal ausgebildeten Hohlraum (15, 34, 50, 51) im Inneren des äußeren Elementes angeordnet ist, **dadurch gekennzeichnet,** daß der innere stoßdämpfende Stab (20, 20', 20") lose untergebracht ist, so daß er seinen Austausch erlaubt.

2. Stoßdämpfer nach Anpsruch 1, **dadurch gekennzeichnet,** daß das äußere Element (10, 10', 10") auch einen Hohlraum (15, 16, 31) zur Unterbringung der Befestigungseinrichtung (70) einschließt.

3. Stoßdämpfer nach Anspruch 1 oder 2, **dadurch gekennzeichnet,** daß die stoßdämpfende Stange (20, 20', 20") mit Vertiefungen oder Hohlräumen (21 bis 26, 60) versehen ist.

4. Stoßdämpfer nach Anspruch 2 oder 3, **dadurch gekennzeichnet,** daß der Hohlraum (15, 16, 31) zur Aufnahme der Befestigungseinrichtung (70) zwei geneigte Widerlageroberflächen (17, 18, 32, 33) für ein Zusammenwirken mit der Befestigungseinrichtung hat.

5. Stoßdämpfer nach einem der Ansprüche 2 bis 4, **dadurch gekennzeichnet,** daß das Verbindungsstück (35, 52), welches zwischen dem Hohlraum (34, 50, 51), der den stoßdämpfenden Stab (20', 20") unterbringt, und dem Hohlraum (31), welcher die Befestigungseinrichtung (70) unterbringt, angeordnet ist.

6. Stoßdämpfer nach einem der Ansprüche 1 bis 5, **dadurch gekennzeichnet,** daß das äußere Element (10") eine vertikale Verbindung (53) hat, welche zwischen zwei Hohlräumen (50, 51) angeordnet ist, die stoßdämpfende Stäbe (20") unterbringen.

7. Stoßdämpfer nach einem der Ansprüche 1 bis 6, **dadurch gekennzeichnet,** daß das äußere Element (10') mit einer Gleitschicht (40) auf seiner oberen Oberfläche versehen ist.

8. Verwendung eines Stoßdämpfers nach einem der Ansprüche 1 bis 7, **dadurch gekennzeichnet,** daß eine Anzahl von Stoßdämpfern (1, 1', 1") auf einer gegen Stoß zu schützende Trägeroberfläche (100) befestigt ist, wobei die Seitenkanten (13, 14) benachbarter Stoßdämpfer in Berührung miteinander stehen oder nahe beeinander liegen.

9. Verfahren zur Verwendung eines Stoßdämpfers nach einem der Ansprüche 1 bis 7, **dadurch gekennzeichnet,** daß man bei der Verwendung einen oder mehrere der stoßdämpfenden Stäbe (20, 20', 20") durch andere Stäbe in einer Weise ersetzt, in der man die stoßdämpfenden Eigenschaften des Stoßdämpfers (1, 1', 1") so zurichtet, daß sie laufenden Anforderungen genügen.

## Revendications

1. Amortisseur de chocs (1; 1'; 1") présentant un élément externe (10; 10'; 10") réalisé en une matière caoutchouteuse ou plastique résistant aux impacts et à l'usure, et une barre d'amortissement de chocs interne (20; 20'; 20") réalisée en une matière procurant un effet d'amortissement d'impact, l'amortisseur comprenant en outre un dispositif de fixation (70) pour la fixation de l'amortisseur à une surface de support (100) à protéger contre le choc de forces d'impact, la barre d'amortissement de chocs (20; 20'; 20") étant agencée dans une ouverture allongée (15; 34; 50; 51), en forme de canal, à l'intérieur de l'élément externe, caractérisé en ce que la barre d'amortissement de chocs interne (20; 20'; 20") est logée de façon libre de manière à en permettre un remplacement.

2. Amortisseur de chocs suivant la revendication 1, caractérisé en ce que l'élément externe (10; 10'; 10") comprend également une ouverture (15, 16; 31) pour recevoir le dispositif de fixation (70).

3. Amortisseur de chocs suivant la revendication 1 ou 2, caractérisé en ce que la barre d'amortissement de chocs (20; 20'; 20") est munie d'évidements ou de cavités (21 à 26; 60).

4. Amortisseur de chocs suivant la revendication 2 ou 3, caractérisé en ce que l'ouverture (15, 16; 31) pour loger le dispositif de fixation (70) présente deux surfaces de butée obliques (17, 18; 32, 33) pour coopérer avec le dispositif de fixation.

5. Amortisseur de chocs suivant l'une quelconque des revendications 2 à 4, caractérisé par le raccord (35; 52) qui est situé entre l'ouverture (34; 50, 51) qui reçoit la barre d'amortissement de chocs (20'; 20") et l'ouverture (31) qui reçoit le dispositif de fixation (70).

6. Amortisseur de chocs suivant l'une quelconque des revendications 1 à 5, caractérisé en ce que l'élément externe (10") présente un raccordement vertical (53) qui est situé entre deux ouvertures (50, 51) qui reçoivent des barres d'amortissement de chocs (20").

7. Amortisseur de chocs suivant l'une quelconque des revendications 1 à 6, caractérisé en ce que l'élément externe (10') est muni d'une couche de glissement (40) sur sa surface supérieure.

8. Utilisation d'un amortisseur de chocs suivant l'une quelconque des revendications 1 à 7, caractérisée en ce que de nombreux amortisseurs de chocs (1; 1'; 1") sont montés sur une surface de support (100) à protéger d'un choc d'impact, les bords latéraux (13, 14) d'amortisseurs de chocs voisins étant en contact l'un avec l'autre ou étant situés à proximité l'un de l'autre.

9. Procédé se rapportant à l'utilisation d'un amortisseur de chocs suivant l'une quelconque des revendications 1 à 7, caractérisé par un remplacement, en cours d'utilisation, d'une ou de plusieurs des barres d'amortissement de chocs (20; 20'; 20") par d'autres barres de façon à adapter les propriétés d'amortissement de chocs de l'amortisseur de chocs (1; 1'; 1") à des nécessités du moment.
